# EUROPÄISCHE PATENTSCHRIFT

(11) **EP 1 941 244 B1**
(45) Veröffentlichungstag und Bekanntmachung des Hinweises auf die Patenterteilung: **28.01.2015**
(21) Anmeldenummer: 06806497.1
(22) Anmeldetag: 24.10.2006
(51) Int. Cl.: G01F 1/684, G01F 1/692, G01F 1/698

(54) **STRÖMUNGSSENSORELEMENT UND DESSEN SELBSTREINIGUNG**
FLOW SENSOR ELEMENT AND ITS SELF-CLEANING
ÉLÉMENT CAPTEUR DE FLUX ET AUTONETTOYAGE DE CELUI-CI

(30) Priorität: 24.10.2005 DE 102005051182; 30.06.2006 DE 102006030786
(43) Veröffentlichungstag der Anmeldung: 09.07.2008
(60) Teilanmeldung: 14163524.3
(73) Patentinhaber: HERAEUS SENSOR TECHNOLOGY GMBH, D-63450 Hanau (DE)
(72) Erfinder: WIENAND, Karlheinz, 63741 Aschaffenburg (DE); ULLRICH, Karlheinz, 63920 Großheubach (DE); MUZIOL, Matthias, 63533 Mainhausen (DE)
(74) Vertreter: Schultheiss & Sterzel Patentanwälte PartG mbB
(86) Internationale Anmeldenummer: PCT/EP2006/010232
(87) Internationale Veröffentlichungsnummer: WO 2007/048573

(56) Entgegenhaltungen:
- EP-A- 1 106 797
- EP-A- 1 431 718
- JP-A- 61 122 559
- US-A- 5 247 156
- US-A- 5 321 386

## Beschreibung

Die Erfindung betrifft ein Strömungssensorelement mit Schichtwiderständen, insbesondere mit einem Temperatursensor auf Basis eines Platin-Dünnfilm-Widerstandes und einem Heizleistungssensor auf Basis eines Platin-Dünnfilm-Widerstands. Vorzugsweise sind der Temperatursensor und der Heizleistungssensor an einem Trägerelement angeordnet. Elektrische Leiterbahnen und Anschlussflächen zur elektrischen Kontaktierung von Temperatursensoren und Heizleistungssensoren auf einem Keramiksubstrat anzuordnen, hat sich dabei bewährt. Des Weiteren betrifft die Erfindung die Herstellung und Anwendung eines solchen Strömungssensorelements.

Derartige Strömungssensorelemente sind aus EP 1 065 476 A1 bekannt. Dort ist ein thermischer Luftdurchflusssensor offenbart, bei dem ein Sensorelement mit einem Heizwiderstand und einem Widerstandstemperaturmesselement in einer Aussparung eines Keramiklaminat-Körpers versenkt angeordnet und mit Keramikzement befestigt ist. Aufgrund der Klebeverbindung und der versenkten Anordnung des Sensorelements mit bzw. in dem Keramiklaminat weist das Sensorelement eine merkliche Reaktionsträgheit bei Temperaturwechseln des Messmediums auf. Die elektrischen Kontakte sind im Strömungsbereich mit einem Epoxidharz bedeckt, so dass ein Einsatz der Vorrichtung bei Temperaturen oberhalb 300°C nicht möglich ist. Zudem ist die Anordnung aufwendig und daher kostenintensiv.

DE 102 25 602.0 offenbart einen Temperatursensor mit einer Gesamtdicke von 10 bis 100 µm, der ein metallisches Foliensubstrat mit einer elektrisch isolierenden Beschichtung aufweist, auf welcher ein Platin-Dünnfilm-Widerstand als temperatursensitives Element angeordnet ist. Der Temperatursensor ist im Bereich eines Kühlkörpers für ein Halbleiterbauelement eingesetzt. DE 195 06 231 A1 offenbart einen Heißfilm-Anemometer mit einem Temperatursensor und einem Heizleistungssensor. Der Heizleistungssensor ist brückenartig in einer Ausnehmung einer Kunststoffträgerplatte angeordnet. Die Platin-Temperatur-Dünnschichtelemente für den Temperatursensor und den Heizleistungssensor sind auf einem Keramiksubstrat, welches vorzugsweise aus Aluminiumoxid gebildet ist, angeordnet.

DE 199 41 420 A1 offenbart ein Sensorelement zur Temperaturmessung auf einem metallischen Substrat, das eine Isolationsschicht als Membrane aufweist. Dabei überspannt die Membrane eine Ausnehmung im metallischen Substrat. Der Platindünnfilm ist dabei im Bereich der Ausnehmung auf der Membrane angeordnet.

DE 101 24 964 A1 offenbart einen Sensor zur Messung von Strömungsgeschwindigkeiten von Gasen oder Flüssigkeiten mit einer Trägermembran, die in Form einer Fahne ausgebildet ist. Die Trägermembran ist vorzugsweise aus einem Kunststoff gebildet und weist eine elektrische Leiterbahn aus Platin und elektrische Zuleitungen auf. Der Einsatz eines solchen Sensors mit einer Trägermembran aus Kunststoff ist bei Temperaturen oberhalb 300°C nicht möglich.

EP 1 431 718 A2 offenbart ein schnell ansprechendes Strömungssensorelement zur Messung von Massendurchflüssen von heißen gasförmigen oder flüssigen Medien. Hierzu weisen ein Temperaturmesselement und ein Heizelement jeweils eine metallische Trägerfolie mit einer elektrisch isolierenden Beschichtung auf, auf welcher die Platin-Dünnfilm-Widerstände angeordnet sind. Bei Verschmutzung driftet der Messwert.

Es ist nun Aufgabe der Erfindung, Strömungssensoren in Abgasrückführungen für die Massenproduktion geeignet anzuordnen, vorzugsweise noch der Drift entgegenzuwirken, insbesondere ein entsprechendes Strömungssensorelement zu reinigen oder ein starken Verschmutzungen, wie z.B. Abgas, ausgesetztes Strömungssensorelement funktionsstabil zu halten.

Die Aufgabe wird mit den Merkmalen der unabhängigen Ansprüche gelöst.

In den abhängigen Ansprüchen sind bevorzugte Ausführungen beschrieben.

Ein maßgeblicher Aspekt für die vorliegende Erfindung ist eine Selbstreinigung des Temperaturmesselementes durch Ausglühen mittels eines Heizleiters. Insbesondere ist dieser Heizleiter auf dem Chip des Temperaturmesselements integriert. In einer bevorzugten Ausführung werden mindestens zwei Platin-Dünnfilmwiderstände auf einem keramischen Trägerplättchen angeordnet. Dies ermöglicht ein Erhitzen des Temperaturmesselements zum ausheizen oder ausglühen von Verunreinigungen.

Insbesondere sind die beiden Widerstände des Temperaturmesselements auf einem keramischen Untergrund angeordnet, vorzugsweise auf einem massiven Keramikplättchen.

Ist das Strömungssensorelement als mehrteiliges keramisches Bauteil ausgebildet, ermöglicht dies neben der bevorzugten Selbstreinigung des Temperaturmesselements auch eine Fremdeinwirkung zur Reinigung des Temperaturelements. Beispiele für Reinigung durch äußere Einflüsse sind Bestrahlung, chemische Behandlung und Wärmeübertragung innerhalb des Strömungssensorelements sowie Kombinationen davon. Als keramische Komponenten des mehrteiligen keramischen Bauteils sind neben dem Trägerteil, das vorzugsweise bereits als Laminat zusammengesetzt ist, noch das Temperaturmesselement und das Heizelement in Betracht zu ziehen. Ganz besonders bevorzugt ist das Trägerteil als Deckel ausgebildet oder als eine Seite bzw. Fläche eines Hohlkörpers, insbesondere dessen Stirnseite. Statt eines keramischen Trägers können die Widerstände auch auf keramischen Untergrund auf einem alternativen Träger angeordnet sein.

Es ist vorteilhaft, wenn das Temperaturmesselement rechteckige keramische Trägerplättchen mit zwei langen und zwei schmalen Kanten aufweist und dass die keramischen Trägerplättchen im Bereich einer der schmalen Kanten zwischen Keramikfolien des Keramikfolien-Laminats oder zwischen mindestens zwei Teilen des Keramikbauteils angeordnet sind.

Ebenso ist es vorteilhaft, wenn das mindestens eine Heizelement rechteckige keramische Trägerplättchen mit zwei langen und zwei schmalen Kanten aufweist und dass die keramischen Trägerplättchen im Bereich einer der schmalen Kanten zwischen Keramikfolien des Keramikfolien-Laminats oder zwischen mindestens zwei Teilen des Keramikbauteils angeordnet ist.

Ganz besonders bevorzugt weist das Temperaturmesselement oder das mindestens eine Heizelement ein rechteckiges keramisches Trägerplättchen mit zwei langen und zwei schmalen Kanten auf wobei die keramischen Trägerplättchen in Öffnungen eines Deckels oder einer Hohlkörperstirnseite angeordnet sind.

Die Platin-Dünnfilmwiderstände werden dabei vorzugsweise an dem, dem KeramikfolienLaminat oder den Keramikbauteilen abgewandten Ende der Trägerplättchen angeordnet, um eine möglichst geringe thermische Beeinflussung der Platin-Dünnfilmwiderstände durch das thermisch träge Keramikfolien-Laminat oder die thermisch trägen Keramikbauteile zu gewährleisten.

Um eine gegenseitige Beeinflussung von Temperaturmesselement und Heizelement zu unterbinden, ist es von Vorteil, wenn der Platin-Dünnfilmwiderstand des Heizelements weiter vom Keramikfolien-Laminat oder vom Keramikbauteil entfernt angeordnet ist als der Platin-Dünnfilmwiderstand des Temperaturmesselements. Dadurch sind die Platin-Dünnfilmwiderstände des Heizelements nicht in der gleichen Strömungsfaser des Messmediums angeordnet wie die Platin-Dünnfilmwiderstände des Temperaturmesselements.

Erfindungsgemäß wird besonders bevorzugt auch eine anemometrische Messeinrichtung bereitgestellt, bei der Schichtwiderstände in einem Deckel oder einem Hohlkörper in einer Öffnung oder in Öffnungen des Deckels oder Hohlkörpers befestigt sind, wobei zwei Widerstände um ein bis drei Größenordnungen verschieden sind.

Der um ein bis drei Größenordnungen größere Widerstand eignet sich als Temperaturmesswiderstand und wird im Folgenden als solcher bezeichnet. Die um ein bis drei Größenordnungen gegenüber dem Temperaturmesswiderstand kleineren Widerstände eignen sich zum Heizen. Bezüglich dieser Heizwiderstände wird im Rahmen der vorliegenden Erfindung zwischen verschiedenen Funktionen unterschieden:
1. Heizwiderstände zur Selbstreinigung des Temperatursensors als Bestandteil des Temperatursensors.
2. Heizwiderstände als Heizleistungssensoren zur Ermittlung eines Masseflusses nach dem anemometrischen Prinzip.

Heizleistungssensoren mit zwei Heizleitern erlauben die Bestimmung der Richtung des Massenflusses. Heizleistungssensoren mit einem zusätzlichen Temperaturmesswiderstand gestatten eine genaue Temperatureinstellung des Heizleistungssensors. Die vorliegende Erfindung betrifft hierbei ausschließlich Schichtwiderstände, die als Dickschicht oder Dünnschicht ausgeführt sind, vorzugsweise in Platin, insbesondere als Platin-Dünnschicht. Die Schichtwiderstände sind auf Trägermaterial angeordnet, insbesondere auf keramischem Untergrund. Man kann den keramischen Untergrund als Träger ausführen oder auf einem Träger, wie z.B. einem Metallplättchen, anordnen. Im Sprachgebrauch werden auf einem Trägermaterial aufgebrachte Schichtwiderstände ebenfalls als Schichtwiderstände bezeichnet, so dass zwischen Schichtwiderständen im engeren Sinn als der reinen Widerstandsschicht und Schichtwiderständen einschließlich des Trägermaterials sprachlich nicht unterschieden wird. Die in Öffnungen eines Deckels oder Hohlkörpers gesteckten Schichtwiderstände umfassen das Trägermaterial, auf dem die dünnere Dickschicht als Widerstandsschicht angeordnet ist.

In bevorzugter Ausführung sind die Schichtwiderstände im engeren Sinn auf einem keramischen Untergrund angeordnet. Verschiedene Schichtwiderstände im weiteren Sinn können nebeneinander in einer Öffnung eines Deckels oder Hohlkörpers angeordnet werden oder aber separat in jeweils einer Öffnung. Vorzugsweise sind Heizleistungssensoren und Temperatursensoren voneinander beabstandet. Zwei Heizleiter eines Heizleistungssensors sind vorzugsweise so hintereinander angeordnet, dass sie in der Strömungsrichtung hintereinander liegen. Vorzugsweise werden Heizleistungssensoren mit zwei Heizleitern auf einem gemeinsamen Untergrund oder mit zwei nacheinander angeordneten, identischen Chips ausgeführt.

Die Öffnungen des Deckels oder Hohlkörpers sind zweckmäßigerweise Schlitze oder Bohrungen.

Der Deckel ist zum dichten Abschluss eines Rohres vorgesehen. Ist der Deckel aus Metall, kann er mit einem Metallrohr verschweißt werden. Die Schichtwiderstände im weiteren Sinne werden durch die Öffnung oder die Öffnungen des Deckels geführt und in der Öffnung oder in den Öffnungen am Deckel befestigt. Der Hohlkörper dient zur Aufnahme der Anschlüsse der Schichtwiderstände, deren sensitiver Teil durch die Öffnung oder die Öffnungen aus dem Hohlkörper ragt.

Ein maßgeblicher Aspekt der vorliegenden Erfindung ist, dass in Dick- oder Dünnschicht erzeugte Widerstände zu einem leicht in Massenproduktion in einen Abgaskanal einbaubaren Sensorelement integriert werden. Die erfindungsgemäße Lösung, Schichtwiderstände in einen Deckel oder Hohlkörper zu stecken, ermöglicht eine einfache Abdichtung des Deckels oder Hohlkörpers sowohl bezüglich des Trägermaterials der Widerstände als auch des Materials des Abgaskanals.

Erfindungsgemäß wird dadurch erreicht, dass die Schichtwiderstände senkrecht zur Grundfläche eines Deckels oder Hohlkörpers ausführbar sind. Hieraus ergeben sich produktionstechnische Vorteile gegenüber einer parallel zu einer Platte fortgeführten Anordnung. Dabei ist die Erfindung nicht auf eine senkrechte Ausführung beschränkt, sondern ermöglicht beliebige Winkel zur Oberfläche des Deckels bzw. Hohlkörpers. Als wesentlicher erfinderischer Vorteil ist die senkrechte Komponente von Winkeln gemäß der vorliegenden Erfindung ausführbar. Dementsprechend tritt der Vorteil der vorliegenden Erfindung besonders bei Winkeln von 60 bis 90 Grad, insbesondere von 80 bis 90 Grad auf.

In bevorzugten Ausführungen
- ist der Hohlkörper einseitig offen, insbesondere als einseitig verschlossenes Rohr ausgebildet;
- ist der Deckel als Scheibe ausgebildet;
- ist die Grundfläche einer Öffnung zur Aufnahme mindestens zweier Schichtwiderstände mindestens um eine Größenordnung kleiner als die Deckelgrundfläche oder eine entsprechende Hohlkörpergrundfläche;
- weist der Deckel oder der Hohlkörper zwei Öffnungen zur Aufnahme von Schichtwiderständen auf;
- besteht der Deckel aus keramischem Material;
- sind die auf keramischem Trägermaterial gehaltenen Schichtwiderstände in der Öffnung eines keramischen Deckels, insbesondere einer keramischen Scheibe mit Glaslot befestigt;
- sind die auf einem keramischen Substrat getragenen Schichtwiderstände in wenigstens einer Öffnung eines Metalldeckels oder Hohlkörpers, insbesondere einer auf einem Metallrohr geschweißten Metallscheibe mit Verguss oder Glas befestigt;
- liegen die beiden Widerstände des Temperaturmesselements in einer Ebene;
- rahmt der kleinere Widerstand (Heizer 2d) den größeren Widerstand (2a zur Temperaturmessung) ein.

Die erfindungsgemäße Messeinrichtung eignet sich für Strömungssensoren oder Rußsensoren.

Das Strömungssensorelement wird mit den Schichtwiderständen nach dem anemometrischen Prinzip betrieben. Erfindungsgemäß wird ein Temperatursensor als Teil einer anemometrischen Messeinrichtung mit einem Heizleiter ausgestattet. Hierdurch wird eine Reinigung des Temperatursensors durch Ausglühen mittels Heizer ermöglicht. Es hat sich bewährt, in der anemometrischen Messeinrichtung Temperatursensor und den vom Heizer des Temperatursensors zu unterscheidenden Heizleistungssensor zu entkoppeln, vorzugsweise zu beabstanden, insbesondere in separate Öffnungen des Deckels oder Hohlkörpers zu stecken. Der Temperatursensor weist einen deutlich höheren Widerstand auf als die Heizer, typischerweise ein bis drei Größenordnungen höher.

Vom Temperatursensor zu unterscheiden ist ein gegebenenfalls auf dem Heizleistungssensor angeordneter Temperaturmesswiderstand, mit dem die Temperatur des Heizleiters besonders genau einstellbar ist. Ein fertiger Temperaturmesswiderstand ist im Unterschied zum Temperatursensor nicht für die Messung der Fluidtemperatur vorgesehen, da er während des Betriebs des Heizleistungssensors nur zu dessen Temperatursteuerung geeignet ist.

Es hat sich bewährt, die Träger der Platin-Dünnfilm-Widerstände als dünne Plättchen auszubilden, so dass eine äußerst geringe thermische Trägheit des Systems und damit eine hohe Ansprechgeschwindigkeit der Platin-Dünnfilm-Widerstände resultiert. Zur Bildung eines Keramikverbunds können gesinterte Keramikfolien eingesetzt werden, die dann vorzugsweise mit einem Glaslot verklebt werden. Die zum Aufbau des Strömungssensorelementes verwendeten Materialien können hervorragend bei Temperaturen im Bereich von - 40° C bis + 800 °C eingesetzt werden.

Besonders bevorzugt ist dabei, wenn die keramischen Trägerplättchen eine Dicke im Bereich von 100 µm bis 650 µm, insbesondere 150 µm bis 400 µm aufweisen. Als Material für die keramischen Trägerplättchen hat sich Al₂O₃ bewährt, insbesondere mit mindestens 96 Gew.-% und vorzugsweise über 99 Gew-%.

Für die Platin-Dünnfilm-Widerstände hat es sich bewährt, wenn diese jeweils eine Dicke im Bereich von 0,5 µm bis 2 µm, insbesondere 0,8 µm bis 1,4 µm aufweisen. Heizwiderstände weisen vorzugsweise 1 bis 50 Ohm auf und neigen bei Verkleinerung der Bauteile zu niederen Werten. Bei den zurzeit gängigen Dimensionen der Bauteile sind 5 bis 20 Ohm bevorzugt. Temperatur-Messwiderstände weisen vorzugsweise 50 bis 10.000 Ohm auf und neigen bei Verkleinerung der Bauteile ebenso zu niederen Werten. Bei den zurzeit gängigen Dimensionen der Bauteile sind 100 bis 2.000 Ohm bevorzugt. Auf dem Temperaturchip ist der Temperaturmesswiderstand um ein Vielfaches größer als der Heizwiderstand. Insbesondere unterscheiden sich diese Widerstände um ein bis zwei Größenordnungen.

Um die Platin-Dünnfilm-Widerstände vor einem korrosiven Angriff durch das Messmedium zu schützen, hat es sich bewährt, wenn diese jeweils mit einer Passivierungsschicht bedeckt sind. Die Passivierungsschicht weist dabei vorzugsweise eine Dicke im Bereich von 10 µm bis 30 µm, insbesondere 15 µm bis 20 µm auf. Besonders bewährt hat sich eine Passivierungsschicht aus mindestens zwei unterschiedlichen Einzelschichten, insbesondere Einzelschichten aus Al₂O₃und Glaskeramik. Die Dünnschichttechnik eignet sich zum Erstellen der bevorzugten Schichtdicke der Al₂O₃-Schicht von 0,5 µm bis 5 µm, insbesondere 1 µm bis 3 µm.

Die Platin-Dünnfilm-Widerstände werden dabei vorzugsweise an dem dem Deckel oder Hohlkörper abgewandten Ende der Trägerplättchen angeordnet, um eine möglichst geringe thermische Beeinflussung der Platin-Dünnfilmwiderstände durch den thermisch trägen Deckel oder Hohlkörper zu gewährleisten.

Um eine gegenseitige Beeinflussung von Temperaturmesselement und Heizelement zu unterbinden, ist es von Vorteil, wenn der Platin-Dünnfilm-Widerstand des Heizelements weiter vom Deckel oder Hohlkörper entfernt angeordnet ist als der Platin-Dünnfilm-Widerstand des Temperaturmesselements. Dadurch sind die Platin-Dünnfilm-Widerstände des Heizelements nicht in der gleichen Strömungsfaser des Messmediums angeordnet wie die Platin-Dünnfilm-Widerstände des Temperaturmesselements.

Die bevorzugte Anordnung des Temperaturmesselements ist in der Strömungsrichtung vor dem Heizelement.

Vorzugsweise sind die Trägerplättchen des Heizelements und des Temperaturmesselements voneinander beabstandet, und zwar insbesondere parallel zueinander.

Es hat sich insbesondere zur Messung von Medien mit wechselnder Strömungsrichtung bewährt, wenn zwei Heizelemente und ein Temperaturmesselement in einer Reihe angeordnet sind.

Es hat sich bewährt, die Trägerplättchen des Heizelements und des Temperaturmesselements in dem Deckel oder Hohlkörper beabstandet voneinander und parallel zueinander anzuordnen.

Mit dem erfindungsgemäßen Strömungssensorelement wird eine Massendurchflussmessung gasförmiger oder flüssiger Medien in Rohrleitungen ermöglicht, insbesondere wenn die Trägerplättchen in der Strömungsrichtung des Mediums angeordnet sind.

Vorzugsweise sind die Trägerplättchen des Heizelements und des Temperaturmesselements voneinander beabstandet und zwar insbesondere in Serie zwischen gleichen Keramikfolien oder Teilen des Keramikbauteils angeordnet.

Dabei hat es sich bewährt, wenn das Keramikfolien-Laminat aus zwei Keramikfolien gebildet ist oder wenn das Keramikbauteil aus zwei Keramikrohren, deren Wandungen im Querschnitt jeweils ein Halbmondprofil aufweisen, gebildet ist.

Es hat sich insbesondere zur Messung von Medien mit wechselnder Strömungsrichtung bewährt, wenn ein Temperaturmesselement, zwei Heizelemente und ein Temperaturmesselement in Serie angeordnet sind.

Weiterhin haben sich Anordnungen bewährt, bei welchen das Keramikfolien-Laminat aus drei Keramikfolien gebildet ist.

Dabei hat es sich insbesondere bewährt, wenn die Trägerplättchen des Heizelements und des Temperaturmesselements durch Keramikfolien beabstandet voneinander und parallel zueinander angeordnet sind.

Es ist bevorzugt, ein Heizelement zwischen einer ersten und einer zweiten Keramikfolie und ein Temperaturmesselement zwischen der zweiten und einer dritten Keramikfolie der drei Keramikfolien anzuordnen, wobei das Heizelement und das Temperaturmesselement auf gleicher Höhe des Keramikfolien-Laminats nebeneinander angeordnet sind.

Außerdem hat es sich bewährt, wenn ein Heizelement zwischen einer ersten und einer zweiten Keramikfolie der drei Keramikfolien angeordnet ist und dass zwei Temperaturmesselemente zwischen der zweiten und einer dritten Keramikfolie der drei Keramikfolien angeordnet sind, wobei das Heizelement zwischen den Temperaturmesselementen angeordnet ist.

Weiterhin haben sich Anordnungen bewährt, bei welchen das Keramikfolien-Laminat aus vier Keramikfolien gebildet ist.

Dabei ist es bevorzugt, wenn ein erstes Temperaturmesselement zwischen einer ersten und einer zweiten Keramikfolie der vier Keramikfolien und ein zweites Temperaturmesselement zwischen einer dritten und einer vierten Keramikfolie der vier Keramikfolien angeordnet ist und dass ein Heizelement zwischen der zweiten und der dritten Keramikfolie angeordnet ist, wobei das Heizelement und die Temperaturmesselemente auf gleicher Höhe des Keramikfolien-Laminats nebeneinander angeordnet sind.

Weiterhin ist es bevorzugt, wenn ein erstes Temperaturmesselement zwischen einer ersten und einer zweiten Keramikfolie der vier Keramikfolien und ein zweites Temperaturmesselement zwischen einer dritten und einer vierten Keramikfolie der vier Keramikfolien angeordnet ist und dass ein Heizelement zwischen der zweiten und der dritten Keramikfolie angeordnet ist, wobei die Temperaturmesselemente auf gleicher Höhe des Keramikfolien-Laminat nebeneinander angeordnet sind und das Heizelement versetzt zu den Temperaturmesselementen angeordnet ist.

Die Verwendung eines erfindungsgemäßen Strömungssensorelements zur Massendurchflussmessung gasförmiger oder flüssiger Medien durch Rohrleitungen, wobei die Trägerplättchen parallel zur Strömungsrichtung des Mediums angeordnet sind, ist ideal.

Dabei eignet sich das erfindungsgemäße Strömungssensorelement insbesondere zur Messung an gasförmigen Medien mit einer Temperatur im Bereich von - 40°C bis + 800°C, wie sie beispielsweise das Abgas einer Verbrennungskraftmaschine aufweist.

Die Selbstreinigung durch Aufheizen des Temperaturmesselements ist besonders für im Abgasbereich von Verbrennungsmotoren insbesondere Dieselmotoren angeordnete Sensoren geeignet. Verrußte Sensoren werden durch erhitzen, insbesondere Ausglühen schnell wieder voll funktionsfähig. Dabei lässt sich diese Selbstreinigung während der Lebensdauer eines Motors beliebig oft wiederholen.

Die Anordnung von mehreren Temperaturmesselementen und Heizelementen an dem Trägerelement ermöglicht in idealer Weise auch die Erkennung der Strömungsrichtung bzw. von Strömungsrichtungsänderungen eines Mediums. Insofern ist es vorteilhaft, das erfindungsgemäße Strömungssensorelement zur Messung an Medien mit sich in zeitlichen Abständen ändernder Strömungsrichtung einzusetzen.

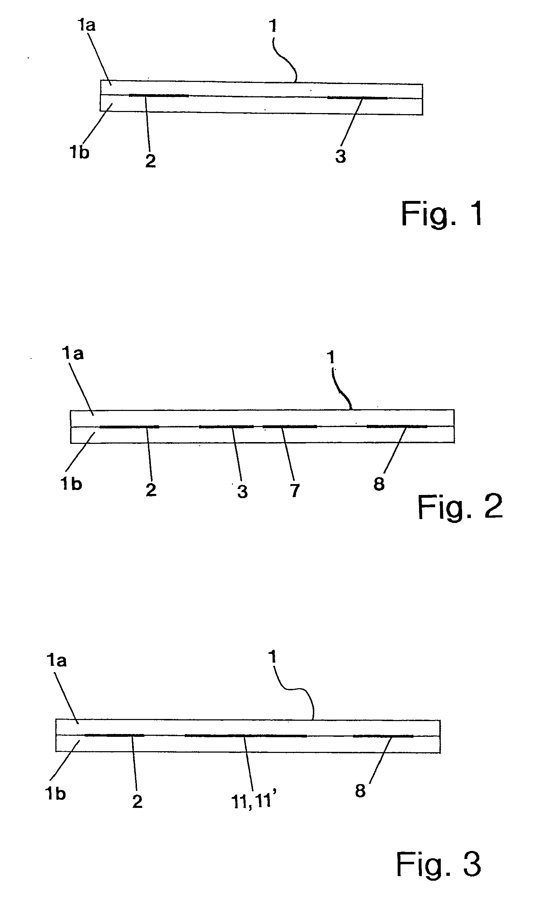

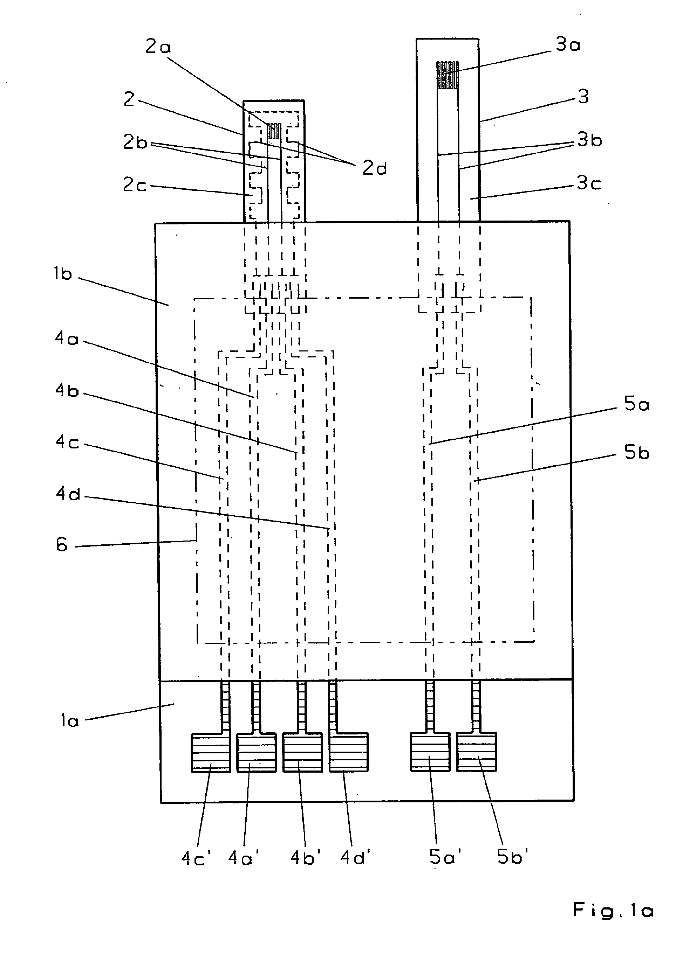

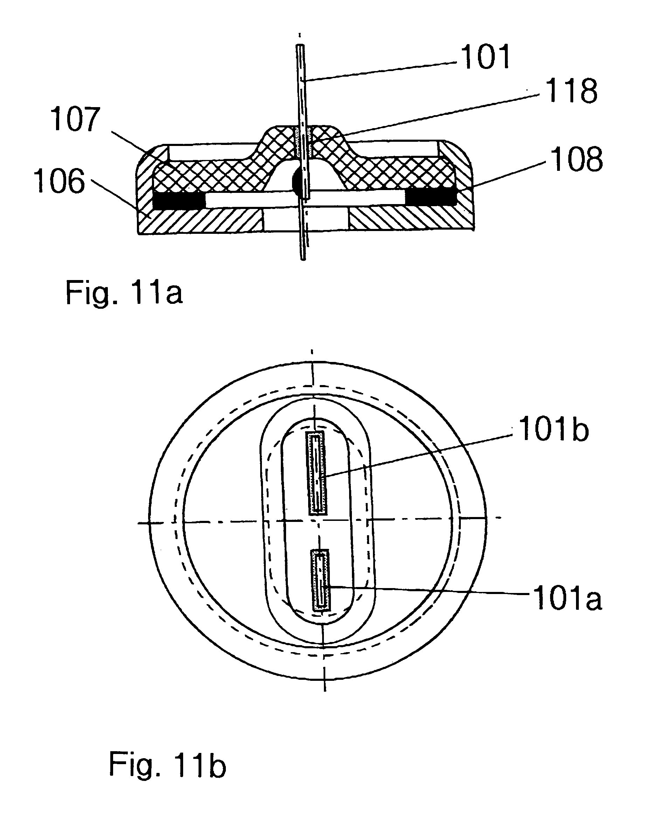

Die Figuren 1 bis 13 sollen das erfindungsgemäße Strömungssensorelement lediglich beispielhaft erläutern. Es sei hier deshalb ausdrücklich hinzugefügt, dass die Anordnung der elektrischen Leiterbahnen und Anschlussflächen sowie die Anzahl der Platin-Dünnfilme pro Temperaturmesselement oder Heizelement auch anders gewählt sein kann, ohne dass der Bereich der Erfindung verlassen wird.
Figur 1 zeigt ein Strömungssensorelement mit zweischichtigem Keramikfolien-Laminat und einem Temperaturmesselement und einem Heizelement (Draufsicht von Fig. 1a);
Figur 1a zeigt das Strömungssensorelement aus Fig. 1 in Seitenansicht;
Figur 2 zeigt ein Strömungssensorelement mit zweischichtigem Keramikfolien-Laminat und zwei Temperaturmesselementen und zwei Heizelementen (Draufsicht von Fig. 2a);
Figur 2a zeigt das Strömungssensorelement aus Fig. 2 in Seitenansicht;
Figur 3 zeigt ein Strömungssensorelement mit zweischichtigem Keramikfolien-Laminat und zwei Temperaturmesselementen und einem Doppelheizelement (Draufsicht von Fig. 3a);
Figur 3a zeigt das Strömungssensorelement aus Fig. 3 in Seitenansicht;
Figur 4 zeigt ein Strömungssensorelement mit dreischichtigem Keramikfolien-Laminat, zwei Temperaturmesselementen und einem Doppelheizelement in Draufsicht;
Figur 5 zeigt ein Strömungssensorelement mit dreischichtigem Keramikfolien-Laminat, einem Temperaturmesselement und einem Heizelement in Draufsicht;
Figur 5a zeigt das Strömungssensorelement aus Fig. 5 in perspektivischer Sicht;
Figur 6 zeigt ein Strömungssensorelement mit dreischichtigem Keramikfolien-Laminat, einem Temperaturmesselement und einem Heizelement in Draufsicht;
Figur 6a zeigt das Strömungssensorelement aus Fig. 6 in Seitenansicht;
Figur 6b zeigt das Strömungssensorelement aus Fig. 6a in Seitenansicht;
Figur 7 zeigt ein Strömungssensorelement mit vierschichtigem Keramikfolien-Laminat, zwei Temperaturmesselementen und einem Doppelheizelement in Draufsicht;
Figur 8 zeigt ein Strömungssensorelement mit vierschichtigem Keramikfolien-Laminat, zwei Temperaturmesselementen und einem Doppelheizelement in Draufsicht;
Figur 9 zeigt ein Strömungssensorelement mit mehrteiligem Keramikbauteil, einem Temperaturmesselement und einem Heizelement im Querschnitt A - A' (siehe Fig. 9a);
Figur 9a zeigt das Strömungssensorelement aus Fig. 9 in Seitenansicht;
Figur 10a zeigt ein Strömungssensorelement mit in einer Metallscheibe angeordnetem Heiz- und Temperaturmesselement;
Figur 10b zeigt ein Strömungssensorelement mit in einer Keramikscheibe angeordnetem Heiz- und Temperaturmesselement;
Figur 11 a zeigt einen Ausschnitt gemäß Fig. 1 oder 2 betreffend eine Anordnung von Schichtwiderständen in einer Keramikscheibe;
Figur 11b zeigt den Ausschnitt gemäß Fig. 3a in Draufsicht;
Figur 12 zeigt ein anemometrisches Stömungssensorelement mit Strömungsrichtungserkennung;
Figur 13 zeigt ein Strömungssensorelement mit zwei thermisch entkoppelten Heizern.

Figur 1 zeigt ein Strömungssensorelement mit einem Keramikfolien-Laminat 1, das aus einer ersten Keramikfolie 1a aus Al₂O₃ und einer zweiten Keramikfolie 1 b aus Al₂O₃ gebildet ist. In Serie zwischen der ersten Keramikfolie 1a und der zweiten Keramikfolie 1 b sind ein Temperaturmesselement 2 und ein Heizelement 3 teilweise eingebettet und elektrisch kontaktiert. Ermöglicht wird eine Messung des Massendurchflusses nach dem Prinzip des Heißfilmanemometers. Das Heizelement 3 wird dabei durch eine elektrische Regelschaltung ( Brückenschaltung und Verstärker in einem Regelkreis ) entweder auf einer konstanten Temperatur (z.B. von 450°C) oder einer konstanten Temperaturdifferenz (z.B. von 100 K) zum Temperatur-messelement 2 gehalten. Eine Änderung im Massenfluss des Mediums ruft nun eine Änderung der Leistungsaufnahme des Heizelementes 3 hervor, die elektronisch auswertbar ist und in direkten Bezug zum Massenfluss steht.

Figur 1a zeigt das Strömungssensorelement aus Fig. 1 in Seitenansicht. Dabei ist erkennbar, dass das Temperaturmesselement 2 und das Heizelement 3 über elektrische Leiterbahnen 4a, 4b, 4c, 4d, 5a, 5b mit Anschlussflächen 4a', 4b',4c', 4d', 5a', 5b' elektrisch kontaktiert sind. Die elektrischen Leiterbahnen 4a, 4b, 4c, 4d, 5a, 5b sind auf der ersten Keramikfolie 1 a angeordnet und teilweise von der zweiten Keramikfolie 1 b bedeckt. Daher ist ihre Lage teilweise gestrichelt angedeutet. Das Temperaturmesselement 2 weist ein Trägerplättchen 2c bestehend aus einer Einzelschicht aus Al₂O₃ auf. Ein Platin-Dünnfilmelement 2a zur Temperaturmessung und 2d zum ausheizen und elektrische Anschlussleitungen 2b sind auf der Rückseite des Trägerplättchen 2c inklusive elektrisch isolierender Beschichtung angeordnet und deren Lage daher gestrichelt dargestellt. Das Heizelement 3 weist ein Trägerplättchen 3c bestehend aus einer Einzelschicht aus Al₂O₃ auf. Ein Platin-Dünnfilmelement 3a als Heizer und seine elektrischen Anschlussleitungen 3b sind auf der Rückseite der Trägerfolie 3c angeordnet und deren Lage daher gestrichelt dargestellt.
Die Keramikfolien 1a, 1 b sind im Bereich 6 entweder durch direktes miteinander Versintern oder über ein Glaslot verbunden. Die Anschlussflächen 4a', 4b',4c', 4d', 5a', 5b' sind von der zweiten Keramikfolie 1 b unbedeckt, damit eine Verbindung mit hier nicht dargestellten elektrischen Anschlusskabeln erfolgen kann.

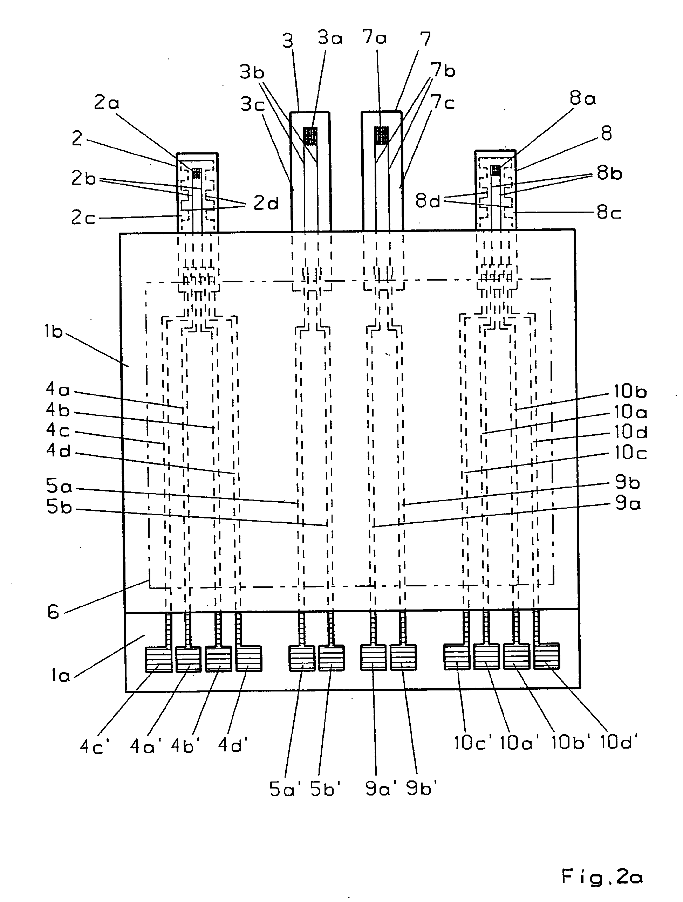

Figur 2 zeigt ein Strömungssensorelement mit einem Keramikfolien-Laminat 1, das aus einer ersten Keramikfolie 1a aus Al₂O₃ und einer zweiten Keramikfolie 1 b aus Al₂O₃ gebildet ist. In Serie zwischen der ersten Keramikfolie 1a und der zweiten Keramikfolie 1 b sind zwei Temperaturmesselemente 2, 8 und zwei Heizelemente 3, 7 teilweise eingebettet und elektrisch kontaktiert.

Dies ermöglicht wiederum eine Messung nach dem Prinzip des Heißfilmanemometers, wie bereits zu Figur 1 beschrieben. Die Anzahl der Heizelementen 3, 7 und Temperaturmesselementen 2, 8 erlaubt es nun aber, jeweils einen elektrischen Regelkreis für je ein Heizelement und je ein Temperaturmesselement ( 2 und 3 bzw. 7 und 8 ) zu bilden und auszuwerten. Mit diesem Strömungssensorelement ist es nun möglich, die Strömungsrichtung eines Mediums zu erkennen, da ein Übertrag an thermischer Energie von dem Heizelement, das in Strömungsrichtung zuerst angeordnet ist, an das nachfolgende Heizelement erfolgt. Die Temperaturänderung beziehungsweise Erwärmung des nachfolgenden Heizelementes führt zu einer geringeren Leistungsaufnahme dieses Heizelementes, was als Signal für die Strömungsrichtung des Mediums ausgewertet werden kann.

Figur 2a zeigt das Strömungssensorelement aus Fig. 2 in Seitenansicht. Dabei ist erkennbar, dass die Temperaturmesselemente 2, 8 und die Heizelemente 3, 7 über elektrische Leiterbahnen 4a, 4b, 4c, 4d, 5a, 5b, 9a, 9b, 10a, 10b mit Anschlussflächen 4a', 4b', 4c, 4d, 5a', 5b', 9a', 9b', 10a', 10b' elektrisch kontaktiert sind. Die elektrischen Leiterbahnen 4a, 4b, 4c, 4d, 5a, 5b, 9a, 9b, 10a, 10b sind auf der ersten Keramikfolie 1 a angeordnet und teilweise von der zweiten Keramikfolie 1 b bedeckt. Daher ist ihre Lage teilweise gestrichelt angedeutet. Das Temperaturmesselement 2 weist ein Trägerplättchen 2c bestehend aus zwei Einzelschichten aus Al₂O₃ und SiO₂ auf. Ein Platin-Dünnfilmelement 2a zur Temperaturmessung und 2d zum Ausglühen und seine elektrischen Anschlussleitungen 2b sind auf der Rückseite des Trägerplättchens 2c angeordnet und deren Lage daher gestrichelt dargestellt. Das Heizelement 3 weist ein Trägerplättchen 3c bestehend aus zwei Einzelschichten aus Al₂O₃ und SiO₂ auf. Ein Platin-Dünnfilmelement 3a als Heizer und seine elektrischen Anschlussleitungen 3b sind auf der Rückseite des Trägerplättchen 3c angeordnet und deren Lage daher gestrichelt dargestellt. Das Heizelement 7 weist ein Trägerplättchen 7c bestehend aus zwei Einzelschichten aus Al₂O₃ und SiO₂ auf. Ein Platin-Dünnfilmelement 7a als Heizer und seine elektrischen Anschlussleitungen 7b sind auf der Rückseite des Trägerplättchen 7c angeordnet und deren Lage daher gestrichelt dargestellt. Das Temperaturmesselement 8 weist ein Trägerplättchen 8c bestehend aus zwei Einzelschichten aus Al₂O₃ und SiO₂ auf. Ein Platin-Dünnfilmelement 8d zur Temperaturmessung und 8a zum Ausheizen und seine elektrischen Anschlussleitungen 8b sind auf der Rückseite des Trägerplättchen 8c angeordnet und deren Lage daher gestrichelt dargestellt.
Die Keramikfolien 1a, 1 b sind im Bereich 6 entweder durch direktes miteinander Versintern oder über ein Glaslot verbunden. Die Anschlussflächen 4a', 4b', 4c', 4d', 5a', 5b', 9a', 9b', 10a', 10b' 10c', 10d' sind von der zweiten Keramikfolie 1 b unbedeckt, damit eine Verbindung mit hier nicht dargestellten elektrischen Anschlusskabeln erfolgen kann.

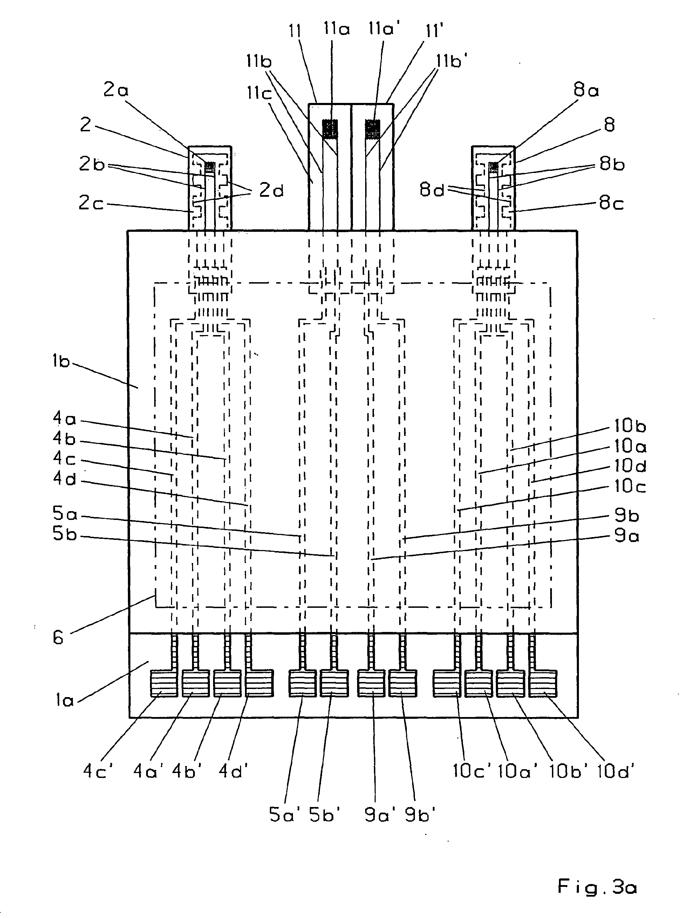

Figur 3 zeigt ein Strömungssensorelement mit einem Keramikfolien-Laminat 1, das aus einer ersten Keramikfolie 1a aus Al₂O₃ und einer zweiten Keramikfolie 1 b aus Al₂O₃ gebildet ist. In Serie zwischen der ersten Keramikfolie 1a und der zweiten Keramikfolie 1 b sind zwei Temperaturmesselemente 2, 8 und ein Doppelheizelement 11, 11' teilweise eingebettet und elektrisch kontaktiert. Unter einem Doppelheizelement wird hier verstanden, dass zwei Heizelemente, die elektrisch getrennt angesteuert werden können, auf einem gemeinsamen Trägerplättchen ausgeführt sind. Auch mit diesem Strömungssensorelement ist es möglich, die Strömungsrichtung eines Mediums zu erkennen.

Figur 3a zeigt das Strömungssensorelement aus Fig. 3 in Seitenansicht. Dabei ist erkennbar, dass die Temperaturmesselemente 2, 8 und das Doppelheizelement 11, 11' über elektrische Leiterbahnen 4a, 4b, 4c, 4d, 5a, 5b, 9a, 9b, 10a, 10b 10c, 10d mit Anschlussflächen 4a', 4b', 4c', 4d', 5a', 5b', 9a', 9b', 10a', 10b' 10c', 10d' elektrisch kontaktiert sind. Die elektrischen Leiterbahnen 4a, 4b, 5a, 5b, 9a, 9b, 10a, 10b 10c, 10d sind auf der ersten Keramikfolie 1 a angeordnet und teilweise von der zweiten Keramikfolie 1 b bedeckt. Daher ist ihre Lage teilweise gestrichelt angedeutet. Das Temperaturmesselement 2 weist ein Trägerplättchen 2c bestehend aus einer Einzelschicht aus Al₂O₃ auf. Ein Platin-Dünnfilmelement 2a zur Temperaturmessung und 2d zum Ausheizen und seine elektrischen Anschlussleitungen 2b sind auf der Rückseite des Trägerplättchen 2c inklusive elektrisch isolierender Beschichtung angeordnet und deren Lage daher gestrichelt dargestellt. Das Doppelheizelement 11, 11' weist ein Trägerplättchen 11c bestehend aus zwei Einzelschichten aus Al₂O₃ und SiO₂ auf. Platin-Dünnfilmelemente 11a, 11 a' als Heizer und deren elektrischen Anschlussleitungen 11 b, 11 b' sind auf der Rückseite des Trägerplättchen 11c inklusive elektrisch isolierender Beschichtung angeordnet und deren Lage daher gestrichelt dargestellt. Das Temperaturmesselement 8 weist ein Trägerplättchen 8c bestehend aus zwei Einzelschichten aus Al₂O₃ und SiO₂ auf. Ein Platin-Dünnfilmelement 8d zur Temperaturmessung und 8a zum Ausheizen und dessen elektrische Anschlussleitungen 8b sind auf der Rückseite des Trägerplättchen 8c angeordnet und deren Lage daher gestrichelt dargestellt.
Die Keramikfolien 1 a, 1 b werden im Bereich 6 direkt miteinander versintert oder mittels Glaslot verbunden. Die Anschlussflächen 4a', 4b', 4c', 4d', 5a', 5b', 9a', 9b', 10a', 10b' 10c', 10d' sind von der zweiten Keramikfolie 1 b unbedeckt, damit eine Verbindung mit hier nicht dargestellten elektrischen Anschlusskabeln erfolgen kann.

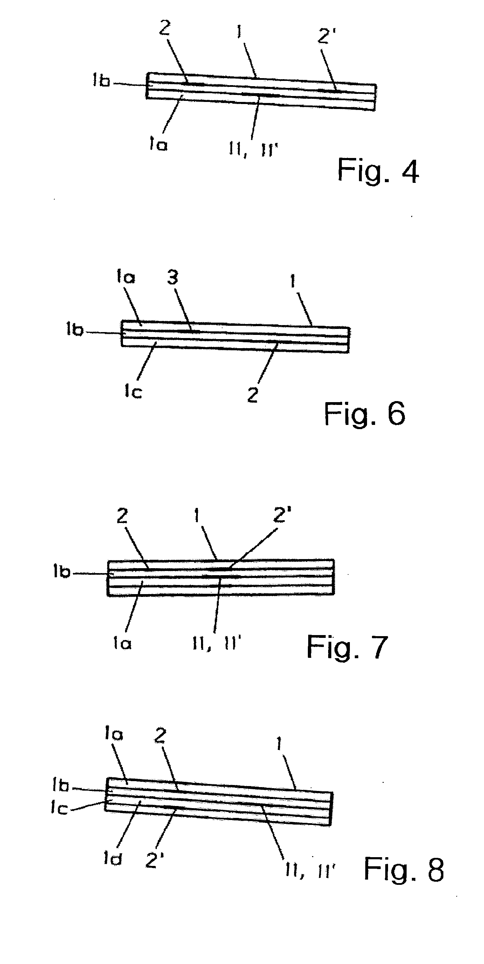

Figur 4 zeigt ein Strömungssensorelement mit einem Keramikfolien-Laminat 1, das aus einer ersten Keramikfolie 1a, einer zweiten Keramikfolie 1b und einer dritten Keramikfolie 1c aus Al₂O₃ gebildet ist. Zwischen der ersten Keramikfolie 1 a und der zweiten Keramikfolie 1 b sind zwei Temperaturmesselemente 2, 2' teilweise eingebettet und elektrisch kontaktiert. Zwischen der zweiten Keramikfolie 1 b und der dritten Keramikfolie 1 c ist ein Doppelheizelement 11, 11' teilweise eingebettet und elektrisch kontaktiert.

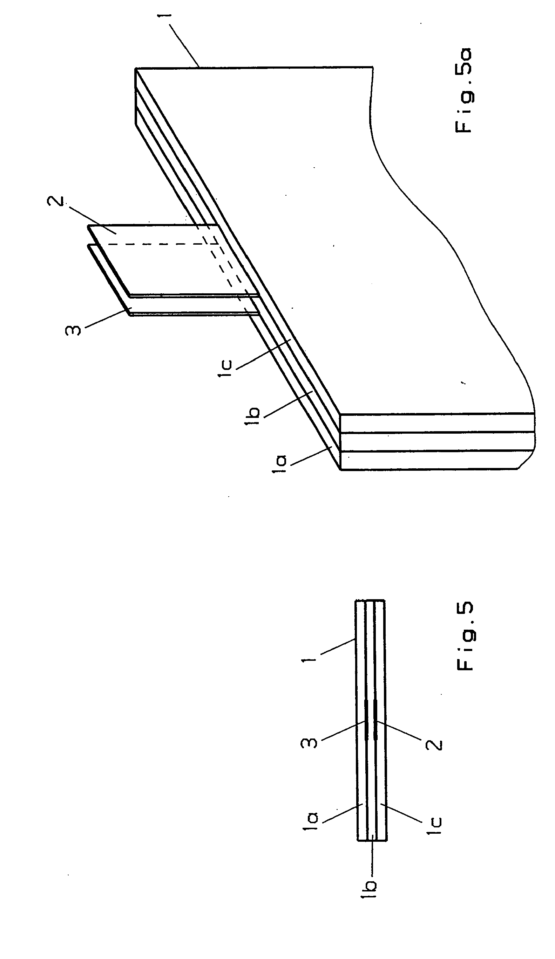

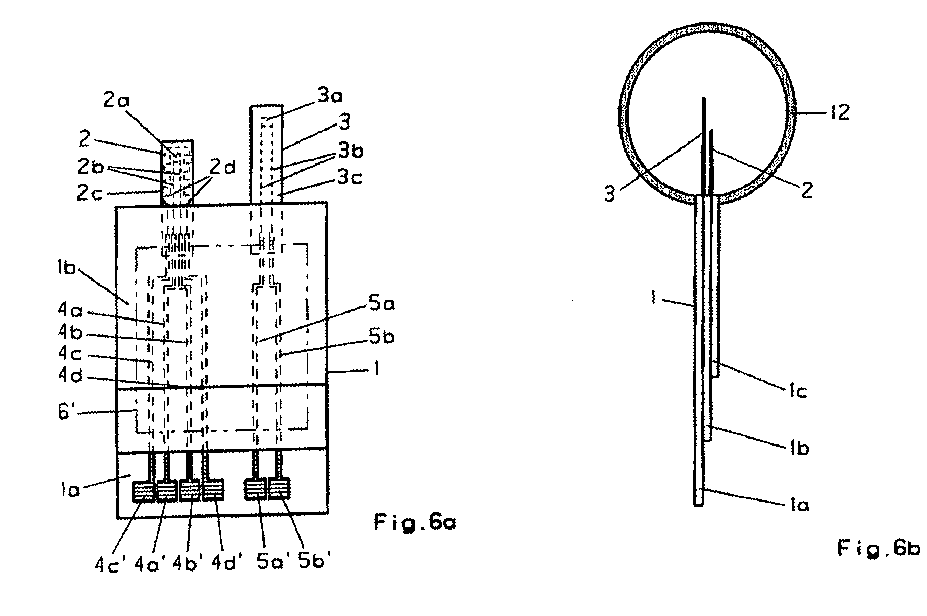

Figur 5, 5a und Figur 6 zeigen jeweils ein Strömungssensorelement mit einem Keramikfolien-Laminat 1, das aus einer ersten Keramikfolie 1 a, einer zweiten Keramikfolie 1 b und einer dritten Keramikfolie 1 c aus Al₂O₃ gebildet ist. Zwischen der ersten Keramikfolie 1a und der zweiten Keramikfolie 1 b ist ein Temperaturmesselement 2 teilweise eingebettet und elektrisch kontaktiert. Zwischen der zweiten Keramikfolie 1b und der dritten Keramikfolie 1c ist ein Heizelement 3 teilweise eingebettet und elektrisch kontaktiert. Mit diesen Strömungssensorelementen ist es nicht möglich, die Strömungsrichtung eines Mediums zu erkennen.

Figur 6a zeigt das Strömungssensorelement aus Fig. 6 in Seitenansicht. Dabei ist erkennbar, dass das Temperaturmesselement 2 und das Heizelement 3 über elektrische Leiterbahnen 4a, 4b, 5a, 5b mit Anschlussflächen 4a', 4b', 5a', 5b' elektrisch kontaktiert sind. Die elektrischen Leiterbahnen 5a, 5b sind auf der ersten Keramikfolie 1a angeordnet und teilweise von der zweiten Keramikfolie 1 b bedeckt. Daher ist ihre Lage teilweise gestrichelt angedeutet. Die elektrischen Leiterbahnen 4a, 4b, sind auf der zweiten Keramikfolie 1 b angeordnet und teilweise von der dritten Keramikfolie 1c bedeckt. Daher ist ihre Lage teilweise gestrichelt angedeutet. Das Temperaturmesselement 2 weist eine Trägerfolie 2c bestehend aus einer Einzelschicht aus Al₂O₃ auf. Ein Platin-Dünnfilmelement 2a zur Temperaturmessung und seine elektrischen Anschlussleitungen 2b sind auf der Rückseite des Trägerplättchen 2c inklusive elektrisch isolierender Beschichtung angeordnet und deren Lage daher gestrichelt dargestellt. In bevorzugter Ausführung ist das Trägerplättchen mit einem zusätzlichen Dünnfilmelement 2d zum Ausheizen des Temperaturelements ausgestattet, das elektrisch analog kontaktiert ist. Das Heizelement 3 weist ein Trägerplättchen 3c bestehend aus einer Einzelschicht aus Al₂O₃ auf. Ein Platin-Dünnfilmelement 3a als Heizer und seine elektrischen Anschlussleitungen 3b sind auf der Rückseite des Trägerplättchens 3c angeordnet und deren Lage daher gestrichelt dargestellt. Die Keramikfolien 1 a, 1 b sind im Bereich 6' entweder durch direktes miteinander Versintern oder über ein Glaslot verbunden. Die Anschlussflächen 5a', 5b' sind von der zweiten Keramikfolie 1 b unbedeckt, damit eine Verbindung mit hier nicht dargestellten elektrischen Anschlusskabeln erfolgen kann. Die Keramikfolien 1 b, 1 c sind im Bereich 6 entweder durch direktes miteinander Versintern oder über ein Glaslot verbunden. Die Anschlussflächen 4a', 4b' sind von der dritten Keramikfolie 1c unbedeckt, damit eine Verbindung mit hier nicht dargestellten elektrischen Anschlusskabeln erfolgen kann.

Figur 6b zeigt das Strömungssensorelement aus Fig. 6a in Seitenansicht, wobei dieses in den Querschnitt einer Rohrleitung 12 eingebaut. Das die Trägerfolien 2c, 3c des Temperaturmesselements 2 und des Heizelements 3 sind dabei parallel zur Strömungsrichtung in die Rohrleitung eingebracht.

Figur 7 und Figur 8 zeigen jeweils ein Strömungssensorelement mit einem Keramikfolien-Laminat 1, das aus einer ersten Keramikfolie 1 a, einer zweiten Keramikfolie 1 b, einer dritten Keramikfolie 1c und einer vierten Keramikfolie 1d aus Al₂O₃ gebildet ist. Zwischen der ersten Keramikfolie 1a und der zweiten Keramikfolie 1 b ist ein Temperaturmesselement 2 teilweise eingebettet und elektrisch kontaktiert. Zwischen der zweiten Keramikfolie 1 b und der dritten Keramikfolie 1c ist ein Doppelheizelement 11, 11' teilweise eingebettet und elektrisch kontaktiert. Zwischen der dritten Keramikfolie 1c und der vierten Keramikfolie 1d ist ein weiteres Temperaturmesselement 2' teilweise eingebettet und elektrisch kontaktiert.

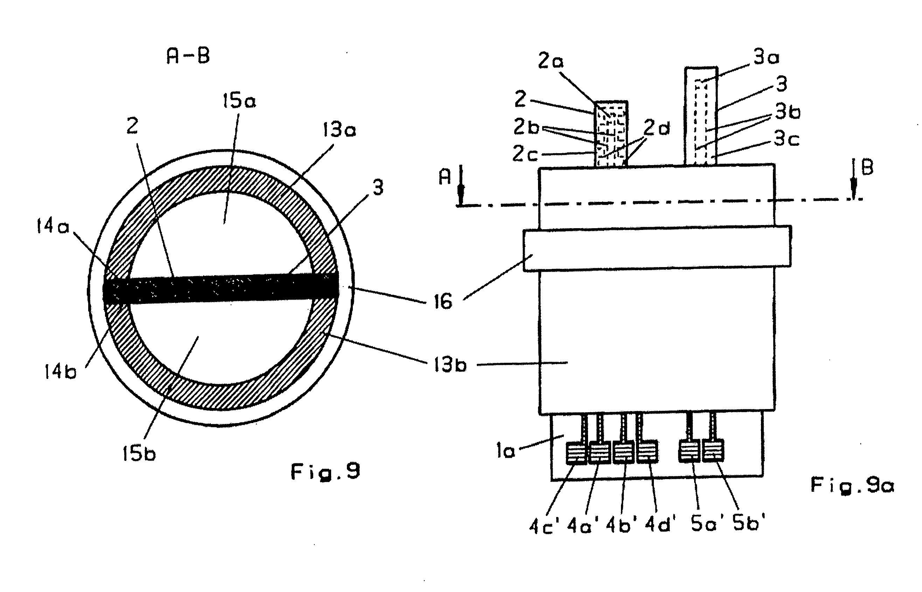

Figur 9 zeigt ein Strömungssensorelement im Querschnitt A - A' (siehe Fig. 9a) mit einem mehrteiligem Keramikbauteil 13a, 13b, 14a, 14b aus Al₂O₃, das ein Temperaturmesselement 2 und ein Heizelement 3 aufweist. Das Keramikbauteil 13a, 13b, 14a, 14b weist zwei Hohlräume 15a, 15b auf, die im Bereich des Temperaturmesselementes 2 beziehungsweise des Heizelementes 3 gasdicht verschlossen sind. Zum Einbau in eine Rohrleitung ist ein Anschlussflansch 16 vorhanden.

Figur 9a zeigt das Strömungssensorelement aus Fig. 9 in Seitenansicht. Dabei sind das Temperaturmesselement 2 und das Heizelement 3 über hier nur teilweise erkennbare elektrische Leiterbahnen 4a, 4b, 5a, 5b mit Anschlussflächen 4a', 4b', 5a', 5b' elektrisch kontaktiert. Die elektrischen Leiterbahnen 4a, 4b, 5a, 5b sind auf einer Keramikplatte 14a angeordnet und - in dieser Darstellung nicht sichtbar - teilweise von einer zweiten Keramikplatte 14b bedeckt. Das Temperaturmesselement 2 weist ein Trägerplättchen 2c bestehend aus einer Einzelschicht aus Al₂O₃ auf. Ein Platin-Dünnfilmelement 2a zur Temperaturmessung und seine elektrischen Anschlussleitungen 2b sind auf der Rückseite der Trägerfolie 2c angeordnet und deren Lage daher gestrichelt dargestellt. Das Trägerplättchen 2c weist ein zusätzliches Platin-Dünnfilmelement 2d mit einem um eine Größenordnung kleineren Widerstand auf. Dieser zum Ausheizen oder Ausglühen bestimmte Widerstand ist mit einer zusätzlichen Kontaktierung analog dem Dünnfilmelement 2a elektrisch kontaktiert. Das Heizelement 3 weist ein Trägerplättchen 3c bestehend aus einer Einzelschicht aus Al₂O₃ auf. Ein Platin-Dünnfilmelement 3a als Heizer und seine elektrischen Anschlussleitungen 3b sind auf der Rückseite des Trägerplättchen 3c angeordnet und deren Lage daher gestrichelt dargestellt. Die Keramikplatten 14a, 14b sind entweder durch direktes miteinander Versintern oder über ein Glaslot miteinander und mit Rohrschalen 13a, 13b zum Keramikbauteil verbunden. Es ist aber auch möglich, zwei Halbrohre (13a plus 14a; 13b plus 14b) zu verwenden, bei denen die Keramikplatte 14a und die Rohrschale 13a beziehungsweise die Keramikplatte 14b und die Rohrschale 14b zu jeweils einem einstückigen Bauteil zusammengefasst sind. Die Anschlussflächen 4a', 4b', 5a', 5b' sind von der zweiten Keramikplatte 14b unbedeckt, damit eine Verbindung mit hier nicht dargestellten elektrischen Anschlusskabeln erfolgen kann.

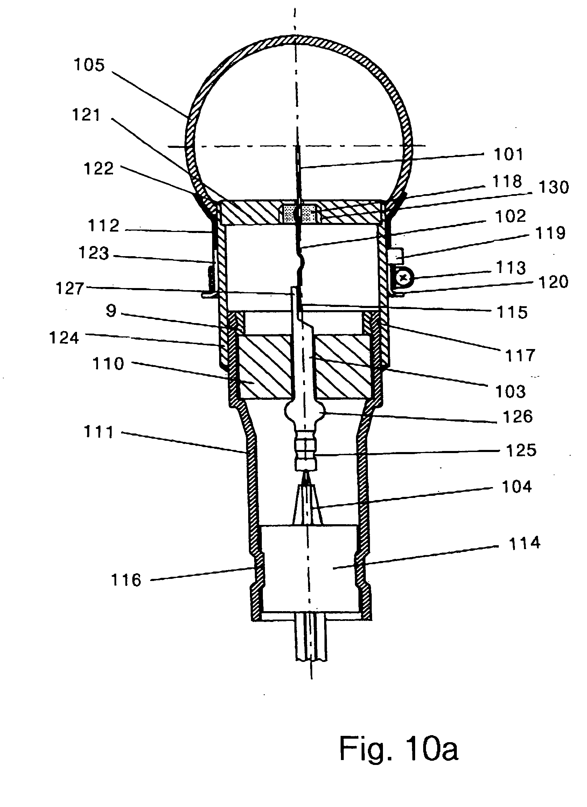

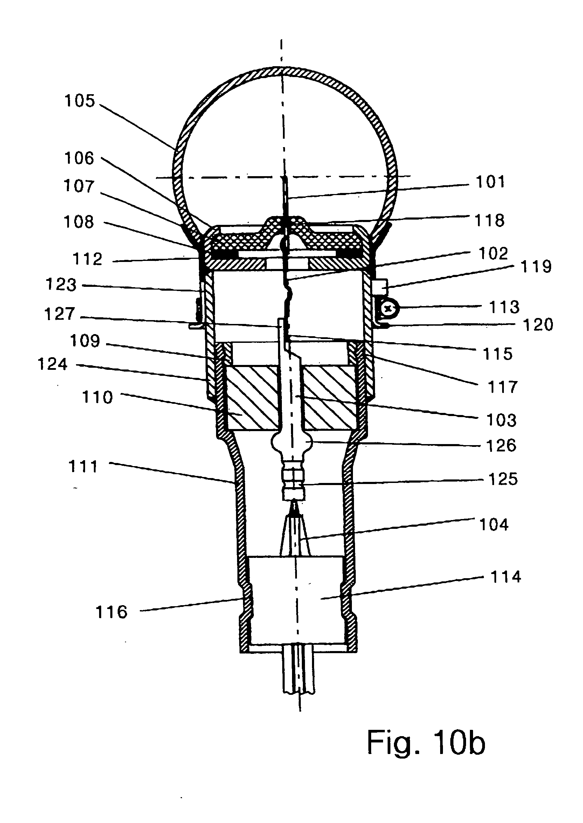

Nach Figur 10a ist ein Sensorelement mit Verguss oder Glas 118 in einer Trägerscheibe 121 aus hitze- und abgasbeständigem Edelstahl gefertigt. Durch eine strukturierte Innenwand des Vergussraums z.B. durch ein Gewinde 130 wird eine gute Verkrallung des Vergusses erreicht. Der Bereich der Trägerscheibe 121, durch den das Sensorelement zum Medium hin austritt, hat eine Rechteckkontur, die nur geringfügig größer ist als der Sensorelementquerschnitt.

Dadurch wird das Strömungssensorelement gerichtet in dem medienführenden Rohr 105 gehaltert und der Innenraum des Komplettsensors gegen das Medium hin abgedichtet.

Die Trägerscheibe 121 ist in ein Gehäuse 124 eingesetzt und mit einer Rundnaht 122 dicht verschweißt. In das Gehäuserohr 124 ist das Gehäuse 111 eingeschweißt. Im Gehäuse 111 wird der Isolierkörper 110 aus temperaturfestem Kunststoff oder Keramik mit einem Ring 109, der durch eine Sicke 117 fixiert ist, gehaltert. Am Kabelausgang wird mit der Sicke 116 eine Kabeldurchführungstülle aus einem Elastomer dicht befestigt. Zuleitungen 104 sind durch die Bohrungen einer Durchführungstülle 114 geführt. Jede Zuleitung ist über einen Crimp 125 mit einer Kontakthülse 103 elektrisch verbunden. Die Kontakthülse 103 weist unter einem Isolierteil 110 eine Verbreiterung 126 und über dem Isolierteil 110 eine Fläche 127, die breiter als der Kontakthülsendurchmesser ist, auf, damit die Kontakthülse in axialer Richtung im Isolierteil 110 festgelegt ist. Auf der Fläche 127 werden die Anschlussdrähte 102 mit der Schweißung 115 elektrisch kontaktiert.

Die Befestigung des Komplettsensors zum medienführenden Rohr 105 erfolgt über eine handelsübliche Schneckengewinde-Schlauchschelle 113 und ein auf dem medienführenden Rohr 105 aufgeschweißtes, geschlitztes Blechflanschteil 112.

Die Ausrichtung des Strömungssensorelementes 101 im Rohr 105 erfolgt über einen Zentrierstift 119, der auf dem Gehäuserohr 124 befestigt ist und über den breiten Schlitz 120 in dem Blechflanschteil 112. Gegenüber einem breiten Schlitz 120 ist ein schmaler Schlitz 123 vorgesehen, der nur dazu dient, das Blechflanschteil 112 leichter an das Gehäuserohr 124 andrücken zu können. So wird eine Montage nur in der richtigen Winkelposition zulassen.

Figur 2 zeigt eine andere Ausführung mit einer keramischen Trägerscheibe 107, in der das Strömungselement 101 mit Glaslot 118 in der Trägerscheibe 107 befestigt ist. Die Trägerscheibe 107 ist zusammen mit einer hochtemperaturbeständigen Dichtung 108 aus Glimmer oder Graphit in der metallischen Fassung 106 eingebördelt. Die Fassung 106 ist ebenfalls mit dem Gehäuserohr 124 dicht verschweißt.

In einer Ausführung als Messeinrichtung eines Strömungssensors nach dem Heißfilmanemometer-Prinzip ist das Heizelement als Heizleistungssensor ausgebildet und das Temperaturmesselement als Temperatursensor, das zusätzlich einen Heizleiter zum Freiglühen tragen kann.

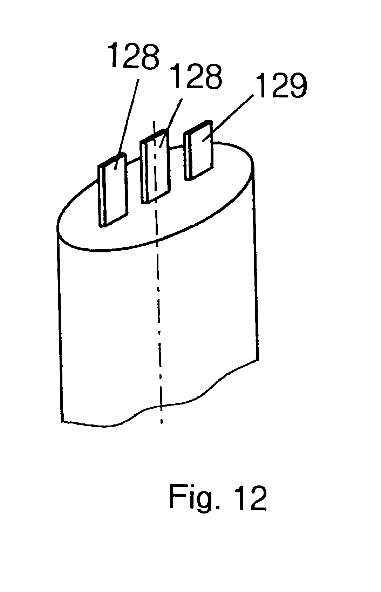

Nach Fig. 12 sind hierzu zwei Heizleistungssensoren 128 zur Richtungserkennung der Medienströmung angeordnet. Das anemometrische Messprinzip funktioniert prinzipiell so, dass das Temperaturmesselement die Medientemperatur genau erfasst. Der oder die beiden Heizelemente des/der Heizleistungssensoren 128 werden dann auf konstanter Übertemperatur zum Temperatursensor 129 durch eine elektrische Schaltung gehalten. Der zu messende Gas- bzw. Flüssigkeitsstrom kühlt den bzw. die Heizelemente des/der Heizleistungssensoren mehr oder weniger ab.

Zur Aufrechterhaltung der konstanten Übertemperatur muss die Elektronik bei Massenfluss entsprechend Strom an den/die Heizelemente nachliefern; dieser erzeugt an einem genauen Messwiderstand eine Spannung, die mit dem Massenfluss korreliert und auswertbar ist. Die zweifache Anordnung des Heizleistungssensors 128 erlaubt hierbei die Richtungserkennung des Massenflusses.

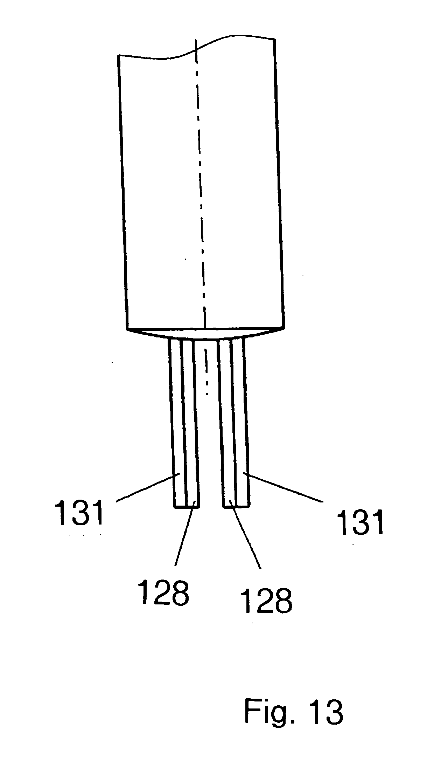

Dagegen sind nach Fig. 13 sind in einer Ausführung als Rußsensor zwei Heizleistungssensoren parallel gegenüberliegend in ein Rohrgehäuse gesteckt.

Die beiden Heizleistungssensoren 128 sind hierbei noch jeweils mit einem aufgeglasten Keramikplättchen 131 versehen.

In der angegebenen Anordnung wird ein Heizleistungssensor oberhalb der pyrolytischen Veraschungstemperatur betrieben; d.h. bei ca. 500°C. Der zweite Heizleistungssensor wird hierbei in einem niedrigeren Temperaturbereich von 200 - 450 °C, bevorzugt von 300 - 400°C betrieben. Bei Rußablagerung auf diesem zweiten Heizleistungssensor wirkt diese Ablagerungsschicht als thermische Isolation und Veränderung der IR-Abstrahleigenschaften im Sinne eines zunehmend Schwarzen Körpers.

Dies kann in einer Referenzmessung zum ersten Heizleistungssensor elektronisch ausgewertet werden.

## Patentansprüche

1. Verfahren zur Selbstreinigung eines Strömungssensorelements, wobei das Strömungssensorelement ein Temperaturmesselement (2, 8), aufweisend ein erstes keramisches Trägerplättchen (2c, 8c), und ein Heizelement (3, 7, 11, 11'), aufweisend ein weiteres Trägerplättchen (3c, 7c, 11 c), aufweist, wobei bei dem Strömungssensorelement das Temperaturmesselement (2, 8) und das Heizelement (3, 7, 11) auf einem Trägerelement (1) angeordnet sind oder in einer Öffnung eines Deckels oder einer Hohlkörperfläche befestigt sind, **dadurch gekennzeichnet, dass** das Temperaturmesselement (2, 8) einen Platindünnfilmwiderstand (2a, 8a) zur Temperaturmessung und einen zusätzlichen Platindünnfilmwiderstand (2d, 8d) zum Ausheizen oder Ausglühen aufweist, wobei beide Platindünnfilmwiderstände (2a, 2d, 8a, 8d) auf dem ersten Trägerplättchen (2c) angeordnet sind, wobei das Temperaturmesselement (2) mit dem zusätzlichen Platindünnfilmwiderstand (2d, 8d) geheizt wird.

2. Strömungssensorelement mit einem Temperaturmesselement (2, 8), aufweisend ein erstes keramisches Trägerplättchen (2c, 8c), und einem Heizelement (3, 7, 11, 11'), aufweisend ein weiteres Trägerplättchen (3c, 7c, 11c), wobei bei dem Strömungssensorelement das Temperaturmesselement (2, 8) und das Heizelement (3, 7, 11, 11') auf einem Trägerelement (1) angeordnet sind oder in einer Öffnung eines Deckels oder einer Hohlkörperfläche befestigt sind, **dadurch gekennzeichnet, dass** das Temperaturmesselement (2, 8) einen Platindünnfilmwiderstand (2a, 8a) zur Temperaturmessung und einen zusätzlichen Platindünnfilmwiderstand (2d, 8d) zum Ausheizen oder Ausglühen aufweist, wobei beide Platindünnfilmwiderstände (2a, 2d, 8a, 8d) auf dem ersten keramischen Trägerplättchen (2c, 8c) angeordnet sind, wobei die Widerstände der beiden Platindünnfilmwiderstände (2a, 2d, 8a, 8d) um ein vielfaches auseinander liegen.

3. Strömungssensorelement nach Anspruch 2, wobei das Temperaturmesselement (2, 8) und das Heizelement (3, 7, 11, 11') auf dem Trägerelement (1) angeordnet sind, **dadurch gekennzeichnet, dass** das Strömungssensorelement ein mehrteiliges Keramikbauteil aufweist, das das Trägerelement (1), das Temperaturmesselement (2, 8, 129) und das Heizelement (3, 8, 11, 11', 128) umfasst.

4. Strömungssensorelement nach einem der Ansprüche 2 oder 3, **dadurch gekennzeichnet, dass** die beiden Platindünnfilmwiderstände (2a, 2d, 8a, 8d) des Temperaturmesselements (2, 8) in einer Ebene liegen.

5. Strömungssensorelement nach einem der Ansprüche 2 bis 4, **dadurch gekennzeichnet, dass** der kleinere Widerstand (Heizer 2d, 8d) des Temperaturmesselements (2, 8) den größeren Widerstand (2a, 8a zur Temperaturmessung) des Temperaturmesselements (2, 8) einrahmt.

6. Verfahren zur Herstellung eines Strömungssensorelements nach Anspruch 2, bei dem ein Temperaturmesselement (2, 8) und ein Heizelement (3, 7, 11, 11') auf einem Trägerelement (1) angeordnet werden **dadurch gekennzeichnet, dass** das Trägerelement (1) aus Keramikfolien laminiert wird.

7. Verwendung eines Strömungssensorelements nach einem der Ansprüche 2 bis 5 zur Massendurchflussmessung gasförmiger oder flüssiger Medien durch Rohrleitungen (12), wobei die Trägerfolien (2c, 3c, 7c, 8c, 11 c) parallel zur Strömungsrichtung des Mediums angeordnet sind.

## Claims

1. A method for self-cleaning of flow sensor element, the flow sensor element comprising a temperature measuring element (2, 8) including a first ceramic carrier plate (2c, 8c), and a heating element (3, 7, 11, 11') including a further carrier plate (3c, 7c, 11c), in the flow sensor element the temperature measuring element (2, 8) and the heating element (3, 7, 11) being disposed on a carrier element (1) or are attached in an opening of a cover or of a hollow body surface, **characterized in that** the temperature measuring element (2, 8) comprises a platinum thin-film resistor (2a, 8a) for temperature measuring and an additional platinum thin-film resistor (2d, 8d) for baking or annealing, the two platinum thin-film resistors (2a, 2d, 8a, 8d) being disposed on the first carrier plate (2c), and the temperature measuring element (2) being heated by the additional platinum thin-film resistor (2d, 8d).

2. A flow sensor element, comprising a temperature measuring element (2, 8) including a first ceramic carrier plate (2c, 8c), and a heating element (3, 7, 11, 11') including a further carrier plate (3c, 7c, 11 c), in the flow sensor element the temperature measuring element (2, 8) and the heating element (3, 7, 11, 11') being disposed on a carrier element (1) or are attached in an opening of a cover or of a hollow body surface, **characterized in that** the temperature measuring element (2, 8) comprises a platinum thin-film resistor (2a, 8a) for temperature measuring and an additional platinum thin-film resistor (2d, 8d) for baking or annealing, the two platinum thin-film resistors (2a, 2d, 8a, 8d) being disposed on the first ceramic carrier plate (2c, 8c), and one of the two platinum thin-film resistors (2a, 2d, 8a, 8d) has a resistance value that is a multiple of the resistance value of the other of the two resistors.

3. The flow sensor element according to claim 2, the temperature measuring element (2, 8) and the heating element (3, 7, 11, 11') being disposed on the carrier element (1), **characterized in that** the flow sensor element comprises a multi-piece ceramic component, which includes the carrier element (1), the temperature measuring element (2, 8, 129) and the heating element (3, 8, 11, 11', 128).

4. The flow sensor element according to either claim 2 or 3, **characterized in that** the two platinum thin-film resistors (2a, 2d, 8a, 8d) of the temperature measuring element (2, 8) are located in one plane.

5. A flow sensor element according to any one of claims 2 to 4, **characterized in that** the smaller resistance (heater 2d, 8d) of the temperature measuring element (2, 8) frames the larger resistance (2a, 8a for temperature measurement) of the temperature measuring element (2, 8).

6. A method for producing a flow sensor element according to claim 2, in which a temperature measuring element (2, 8) and a heating element (3, 7, 11, 11') are disposed on a carrier element (1), **characterized in that** the carrier element (1) is formed by laminating from ceramic films.

7. Use of a flow sensor element according to any one of claims 2 to 5 for measuring the mass flow rate of gaseous or liquid media through pipelines (12), wherein the carrier films (2c, 3c, 7c, 8c, 11 c) are disposed parallel to the flow direction of the medium.

## Revendications

1. Procédé pour l'auto-nettoyage d'un élément de capteur de flux, dans lequel l'élément de capteur de flux comporte un élément de mesure de température (2, 8) comportant une première plaquette de support en céramique (2c, 8c) et un élément chauffant (3, 7, 11, 11') comportant une autre plaquette (3c, 7c, 11 c), dans lequel, dans l'élément de capteur de flux, l'élément de mesure de température (2, 8) et l'élément chauffant (3, 7, 11) sont disposés sur un élément de support (1) ou fixés dans une ouverture du couvercle ou d'une surface de corps creux, **caractérisé en ce que** l'élément de mesure de température (2, 8) comporte une résistance à film de platine mince (2a, 8a) pour la mesure de la température et une résistance à film de platine mince supplémentaire (2d, 8d) pour le chauffage ou la cuisson, les deux résistances à film de platine mince (2a, 2d, 8a, 9d) étant agencées sur la première plaquette de support (2c), l'élément de mesure de température (2) étant chauffé avec la résistance à film de platine mince supplémentaire (2d, 8d).

2. Élément de capteur de flux avec un élément de mesure de température (2, 8) comportant une première plaquette de support en céramique (2c, 8c), et un élément chauffant (3, 7, 11, 11') comportant une autre plaquette de support (3c, 7c, 11 c), dans lequel, dans l'élément de capteur de flux, l'élément de mesure de température (2, 8) et l'élément chauffant (3, 7, 11, 11') sont disposés sur un élément de support (1) ou fixés dans une ouverture d'un couvercle ou d'une surface de corps creux, **caractérisé en ce que** l'élément de mesure de température (2, 8) comporte une résistance à film de platine mince (2a, 8a) pour la mesure de température et une résistance à film de platine mince supplémentaire (2d, 8d) pour le chauffage ou la cuisson, les deux résistances à film de platine mince (2a, 2d, 8a, 8d) étant agencées sur la première plaquette de support en céramique (2c, 8c), les résistances des deux résistances à film de platine mince (2a, 2d, 8a, 8d) étant éloignées l'une deux l'autre selon un multiple.

3. Élément de capteur de flux selon la revendication 2, dans lequel l'élément de mesure de température (2, 8) et l'élément chauffant (3, 7, 11, 11') sont disposés sur l'élément de support (1), **caractérisé en ce que** l'élément de capteur de flux comporte une pièce en céramique en plusieurs parties, laquelle comprend l'élément de support (1), l'élément de mesure de température (2, 8, 129) et l'élément chauffant (3, 7, 11, 11', 128).

4. Élément de capteur de flux selon l'une des revendications 2 ou 3, **caractérisé en ce que** les deux résistances à film de platine mince (2a, 2d, 8a, 8d) de l'élément de mesure de température (2, 8) se trouvent dans un même plan.

5. Élément de capteur de flux selon l'une des revendications 2 à 4, **caractérisé en ce que** la résistance plus petite (élément chauffant 2d, 8d) de l'élément de mesure de température (2, 8) encadre la résistance plus grande (2a, 8a pour la mesure de température) de l'élément de mesure de température (2, 8).

6. Procédé pour la fabrication d'un élément de capteur de flux selon la revendication 2, dans lequel un élément de mesure de température (2, 8) et un élément chauffant (3, 7, 11, 11') sont disposés sur un élément de support (1), **caractérisé en ce que** l'élément de support (1) est laminé à partir de feuilles céramiques.

7. Utilisation d'un élément de capteur de flux selon l'une des revendications 2 à 5, pour la mesure du débit massique de fluides gazeux ou liquides à travers des conduites (12), dans laquelle les feuilles de support (2c, 3c, 7c, 8c, 11 c) sont disposées parallèlement à la direction d'écoulement du fluide.
